# EUROPEAN PATENT APPLICATION

(11) **EP 3 627 429 A1**
(43) Date of publication of application: **25.03.2020**
(21) Application number: 18897440.6
(22) Date of filing: 17.05.2018
(51) Int. Cl.: G06Q 30/06

(54) **INFORMATION PROCESSING METHOD AND APPARATUS, ELECTRONIC DEVICE, AND STORAGE MEDIUM**

(30) Priority: 28.12.2017 CN 201711465734
(71) Applicant: Ninebot (Beijing) Tech Co., Ltd., Beijing 100192 (CN)
(72) Inventor: CHEN, Zichong, Beijing 100192 (CN); SUN, Chunyang, Beijing 100192 (CN); PU, Li, Beijing 100192 (CN)
(74) Representative: Regimbeau
(86) International application number: PCT/CN2018/087342
(87) International publication number: WO 2019/128048

(57) **Abstract**

Disclosed are an information processing method and apparatus, an electronic device, and a storage medium. The information processing method applied to a server comprises: receiving an operation request sent by a user equipment, wherein the operation request comprises: first position information and article demand information, the first position information being used for indicating a target position; according to a selection policy and the first position information, selecting a first target mobile device, wherein the first target mobile device is loaded with articles to which the article demand information points; and sending a first control instruction to the first target mobile device, wherein the first control instruction is at least used for controlling the first target mobile device so same moves to the target position.

## Description

### CROSS-REFERENCE TO RELATED APPLICATION

This application is based upon and claims priority to Chinese patent application No. 201711465734.7 filed on December 28, 2017, the disclosure of which is hereby incorporated by reference in its entirety.

### TECHNICAL FIELD

The disclosure relates, but is not limited, to the technical field of information, and in particular to an information processing method and apparatus, an electronic device and a storage medium.

### BACKGROUND

An automatic vending machine is a machine for automatically selling a commodity. In a related art, an automatic vending device is fixedly disposed in a special place. If a position of the automatic vending device is inaccurate, the utilization rate of the automatic vending device is very low, and public space is occupied. When a user needs to purchase a commodity and it is inconvenient to order a take-out, the user must walk to the automatic vending machine to purchase the commodity. So to some extent the automatic vending machine serves as a shopping store without a shop assistant to sell a commodity, thereby meeting a selling requirement of/for some places where it is unsuitable for setting a physical store. Nonetheless, the solving degree is limited, purchasing requirements of the user are still not met well, and purchasing experience of the user is still very poor.

### SUMMARY

In view of this, embodiments of the disclosure are intended to provide an information processing method and apparatus, an electronic device and a storage medium.

The technical solutions of the disclosure are implemented as follows.

According to a first aspect, an embodiment of the disclosure provides an information processing method, which is applied to a server and includes:
an operation request sent by user equipment is received, herein the operation request includes: first position information and article demand information, and the first position information is used for indicating a target position;
a first target mobile device is selected according to a selection strategy and the first position information, herein the first target mobile device is loaded with an article meeting an indication of the article demand information; and
a first control instruction is sent to the first target mobile device, herein the first control instruction is at least used for controlling the first target mobile device to move to the target position.

According to a second aspect of embodiments, an embodiment of the disclosure provides an information processing method, which is applied to a mobile device, the mobile device being loaded with an article meeting an article demand, and includes:
a first control instruction sent by a server is received; and
the mobile device moves to a target position according to the first control instruction.

According to a third aspect of embodiments, an embodiment of the disclosure provides an information processing apparatus, which is applied to a server, and includes:
a first receiving unit, configured to receive an operation request sent by user equipment, herein the operation request includes: first position information and article demand information, and the first position information is used for indicating a target position;
a selection unit, configured to select a first target mobile device according to a selection strategy and the first position information, herein the first target mobile device is loaded with an article meeting an indication of the article demand information; and
a first sending unit, configured to send a first control instruction to the first target mobile device, herein the first control instruction is at least used for controlling the first target mobile device to move to the target position.

According to a fourth aspect, an embodiment of the disclosure provides an information processing apparatus, which is applied to a mobile device, the mobile device being loaded with an article meeting an article demand, and includes:
a second receiving unit, configured to receive a first control instruction sent by a server; and
a movement unit, configured to move to a target position according to the first control instruction.

According to a fifth aspect, an embodiment of the disclosure provides an electronic device, which includes: a transceiver, a memory, a processor, and a computer program stored on the memory and executed by the processor.

The processor is connected to the transceiver and the memory respectively, and configured to perform, by executing the computer program, the above method provided by one or more technical solutions in the first aspect or second aspect.

According to a sixth aspect, an embodiment of the disclosure provides a computer storage medium; the computer storage medium stores a computer program; and the computer program is executed to perform the above method provided by one or more technical solutions in the first aspect or second aspect.

According to an information processing method and apparatus, an electronic device and a storage medium in the embodiments of the disclosure, a server selects an appropriate first target mobile device upon the reception of an operation request and sends a first control instruction to the first target mobile device. The first target mobile device moves to a target position upon the reception of the first control instruction. If the mobile device is an automatic vending machine, the automatic vending machine is no longer fixed at a special position and can move to the front of a user to provide a selling service for the user. On one hand, the effective utilization rate of the automatic vending machine is effectively improved; and on the other hand, the purchasing demand of the user is better met, and the satisfaction degree of the user in use is improved.

### BRIEF DESCRIPTION OF THE DRAWINGS

FIG. 1 is a flow chart of a first information processing method according to an embodiment of the disclosure.
FIG. 2 is a flow chart of a second information processing method according to an embodiment of the disclosure.
FIG. 3 is a flow chart of a third information processing method according to an embodiment of the disclosure.
FIG. 4 is a structural schematic diagram of an information processing apparatus according to an embodiment of the disclosure.
FIG. 5 is a structural schematic diagram of another information processing apparatus according to an embodiment of the disclosure.
FIG. 6 is a structural schematic diagram of an electronic device according to an embodiment of the disclosure.

### DETAILED DESCRIPTION

The technical solutions of the disclosure are further elaborated below in detail in combination with the accompanying drawings and specific embodiments of the specification.

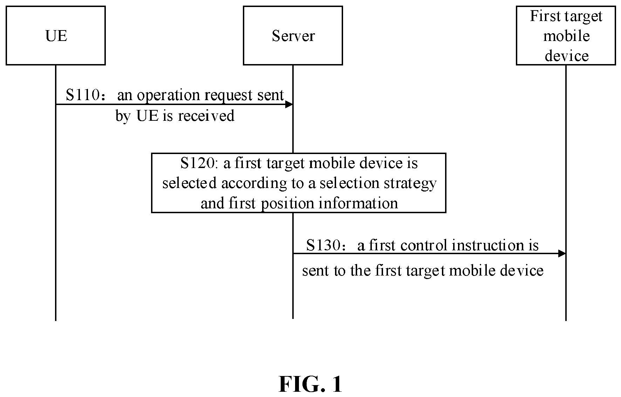

As illustrated in FIG. 1, in an embodiment, an information processing method is provided, and the method is applied to a server and includes the following operations.

At S110: an operation request sent by/form user equipment (UE) is received; herein the operation request includes: first position information and article demand information, and the first position information is used for indicating a target position.

At S120: a first target mobile device is selected according to a selection strategy and the first position information; herein the first target mobile device is loaded with an article meeting an indication of the article demand information.

At S130: a first control instruction is sent to the first target mobile device; herein the first control instruction is at least used for controlling the first target mobile device to move to the target position.

In this embodiment, the server can be an electronic device located on a network side and capable of respectively interacting information with the user equipment and the mobile device.

The user equipment can be a mobile phone, a tablet computer, a wearable device or a fixed terminal or other terminal devices possessed by a user.

The mobile device can be a mobile device loaded with the article. For example, the mobile device can be a robot including a motion chassis, capable of moving on the ground and carrying/bringing an article. Also for example, the mobile device can be a flight robot including a flight apparatus, capable of flying and carrying an article meeting an article demand of the user, etc.

The mobile device includes a moving apparatus and a loading apparatus. The moving apparatus is configured to move the mobile device to implement the conversion of the mobile device in different spaces. The loading apparatus is configured to load an article, so that the mobile device carries the article for movement.

The operation request can be a purchasing request or an article taking request or the like sent by the user equipment.

In some embodiments, a user sends an operation request to the server via user equipment such as a mobile phone and the like. The operation request includes first position information and article demand information. The first position information is used for indicating a target position. The target position can be a position where the user equipment is located and/or a position where the user possessing the target equipment is located. The user equipment can acquire the first position information based on a Global Position System (GPS), a Beidou system and other position systems. The user equipment can also acquire the first position information based on a base station assistant position system. The first position information can be longitude and latitude information, and can also be place name information and the like.

In some embodiments, the target position included in the operation request can be an initial target position. The method further includes: an updated target position is acquired by means of information interaction with the user equipment, and the updated target position is sent to the first target mobile device, so that the corresponding mobile device moves to the updated target position to guarantee that the user takes a desired article from the mobile device successfully and timely.

In short, the first position information indicates the target position.

The article demand information can include: an article identifier of the article required by the user, for example, a serial number, a name, a type and other information of the purchased commodity. The article demand information can further include: type information indicating the article required by the user. For example, if the user is thirsty at present, it can be appropriate to indicate the requirement to purchase a beverage. Also for example, if the user is thirsty at present, a beverage is needed now, and the sugar-free beverage is indicated, the "sugar-free" description is an attribute of the article. In brief, the article demand information can be used for indicating the article required by the user, and can also only indicates the type or attribute information of the article required by the user.

Upon the reception of the operation request, the server selects, according to the selection strategy, a mobile device that can meet the article demand of the user at present and is the most appropriate to serve as the first target mobile device. The server sends the first control instruction to the first target mobile device. Upon the reception of the first control instruction, the first target mobile device moves to the target position, thus transferring the loaded article to a position where the user is located, and facilitating the use of the user.

If the mobile device in this embodiment is an automatic vending machine carrying a commodity, the automatic vending machine can move freely but is not fixed at a special position, and can move freely to the position where the user is located to sell the commodity to the user. It is apparent that the user can control the automatic vending machine to move to his/her position to purchase the commodity by means of a mobile phone and the like without movement. Therefore, on one hand, the effective utilization rate of the automatic vending machine is effectively improved, and the resource waste due to the fact that the automatic vending machine is not used for a long time is prevented; and on the other hand, the user purchases the commodity more conveniently, the demand of the user is better met, and the satisfaction degree of the user is improved.

If the mobile device in this embodiment is an equipment carrying device at a construction site, a worker can send an operation request to the equipment carrying device by means of a mobile phone and other terminal devices. Upon the reception of the operation request, the server selects the equipment carrying device carrying a building material or a tool required by the worker to move to a position where the worker is located, thus providing the required building material and/or tool required for the worker.

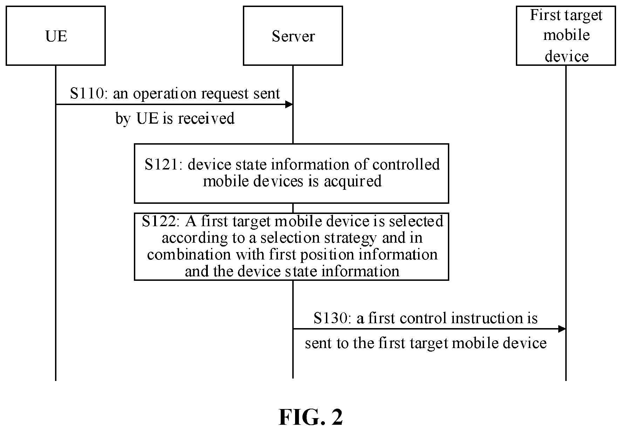

In some embodiments, as illustrated in FIG. 2, the step S120 can include the following operations.

At S121: device state information of controlled mobile devices is acquired, herein the device state information includes: inventory state information; and the device state information further includes: at least one of: movement state information or current position information of the controlled mobile device.

At S122: the first target mobile device is selected according to the selection strategy and in combination with the first position information and the device state information.

The inventory state information can be used for indicating one or more of an inventory level of various articles loaded on the corresponding controlled mobile device, what articles are loaded on the corresponding controlled mobile device, the number of articles in each type, a shelf life/expiration date of the articles and the like. Therefore, the server can determine, according to the inventory state information, which controlled mobile device can provide the required article for the user.

In some embodiments, the device state information can further include: movement state information and current position information of the controlled mobile device. The movement state information can be used for indicating whether the mobile device is in a static state or a moving state. If the mobile device is in the moving state, a current movement parameter is acquired. The movement parameter can include: a movement direction, a movement speed, a current movement target position and other information. The current position information can be used for indicating a current position of the mobile device.

The server selects a most appropriate first target mobile device from multiple mobile devices in terms of the selection strategy and according to the first position information and the device state information. The server sends the first control instruction to the first target mobile device, so that the most appropriate controlled mobile device can be controlled to move to the position where the user is located, so as to provide the required article for the user.

In some embodiments, the device state information can include: energy storage information.

The energy storage information can be used for indicating an energy possessed by the controlled mobile device at present. The movement of the mobile device from one position to another position needs to consume a chemical energy or an electric energy. If the current energy storage is insufficient, it is possible that the controlled mobile device cannot continue to advance at a midway. In this sense, when the first target mobile device is selected, the selection has to be performed according to the energy storage information.

In some embodiments, the step S122 can include the following operations.

According to an inventory digestive strategy and the inventory state information, alternative mobile devices that can meet an article demand corresponding to the article demand information are selected.

The first target mobile device is selected from the alternative mobile devices according to a mobility selection strategy, the first position information and the movement state information. Or, the first target mobile device is selected from the alternative mobile devices according to the mobility selection strategy, the first position information and the current position information. Or, the first target mobile device is selected from the alternative mobile devices according to the mobility selection strategy, the first position information, the current position information and the movement state information.

In this embodiment, according to the inventory state information and the inventory digestive strategy, the alternative mobile devices that can meet the article demand are selected at first. For example, N controlled mobile devices are provided in an area where the target position is located. However, only n controlled mobile devices carry an article that can meet the article demand, and the n controlled mobile devices can serve as the alternative mobile devices.

Some articles can be food or the like which can be expired. When many controlled mobile devices are loaded with the food that meeting meet the article demand, the controlled mobile devices having/with an early shelf life are preferably selected according to the inventory digestive strategy to serve as the alternative mobile devices.

In some other embodiments, according to the inventory digestive strategy, multiple mobile devices loaded with an article meeting the article demand and having a largest inventory level are selected as the alternative mobile devices.

After the alternative mobile devices are selected, according to the mobility selection strategy and based on the first position information and at least one of the movement state information or the current position information, the first target mobile device most suitable to move to the target position can be further selected from the alternative mobile devices. In this embodiment, the mobility selection strategy can be a selection strategy for selecting a mobile target device.

### First manner:

The first target mobile device is selected from the alternative mobile devices according to the mobility selection strategy, the first position information and the movement state information. For example, according to the movement state information, the alternative mobile device in a static state at present and nearest to the target position is selected as the first target mobile device. Also for example, according to the movement state information, the alternative mobile device moving to the target position at present is selected as the first target mobile device. For example, a user A and a user B are very near and both are expected to purchase a commodity from a mobile automatic vending machine. If the user A places an order first (sends an operation request), a device A has already moved to the user A. At this time, the user B also places the order. In such a case, it can be appropriate to select the device A to move to the user A and then move to the user B, thus completing the sales for the orders of the user A and the user B simultaneously.

### Second manner:

The first target mobile device is selected from the alternative mobile devices according to the mobility selection strategy, the first position information and the current position information. For example, according to a current position of the mobile device indicated by the current position information, the alternative mobile device having the current position nearest to the target position is selected as the first target mobile device. Also for example, according to the current position, the target position, and a movement speed of each alternative mobile device, the alternative mobile device capable of moving to the target position fastest is selected as the first target mobile device.

### Third manner:

The first target mobile device is selected from the alternative mobile devices according to the mobility selection strategy, the first position information, and the movement state information and the current position information of the alternative mobile device. For example, the alternative mobile device in a static state at present and nearest to the target position is selected as the first target mobile device according to the movement state information. Also for example, the alternative mobile device moving to a direction in which the target position is located at present and nearest to the target position is selected as the first target mobile device according to the movement state information.

In some embodiments, the step S122 can include any one of the following operations.

An alternative mobile device nearest/closest to the target position is selected as the first target mobile device according to a distance shortest strategy.

An alternative mobile device moving to the target position at shortest time is selected as the first target mobile device according to a time shortest strategy.

An alternative mobile device reaching the target position along a shortest path is selected as the first target mobile device according to a path shortest strategy.

The distance shortest strategy and the time shortest strategy in this embodiment can be used as one of the above-mentioned mobility selection strategies, and can also be directly used as one of the selection strategies in specific implementation.

If the distance shortest strategy is used, the alternative mobile device nearest to the target position is selected as the first target mobile device. Such a method has the characteristic of small calculated amount when the first target mobile device is selected. The server can directly select the first target mobile device in combination with Euclidean distances between a current position of the alternative mobile devices and the target position and the like, and by means of distance sorting.

If the path shortest strategy is used, according to the paths along which the alternative mobile devices move to the target position and the values of the paths, the alternative mobile device along a shortest path is selected as the first target mobile device. The path shortest strategy can reduce the power consumption of the mobile device during moving to the target position.

The time that the mobile device can move to one target position is not only limited by a distance between the mobile device and the target device, but also determined by the mobility performance of the mobile device. The mobility performance can include: a movement speed of the mobile device and the like. If the time shortest strategy is used, the alternative mobile device moving to the target position at the minimum time is selected as the first target mobile device according to planned paths and in combination with mobility parameters of the alternative mobile devices.

In some embodiments, the first control instruction can include the target position, and/or, path information of the first target mobile device moving to the target position. The path information can be path information determined when the server calculates and selects the first target mobile device. In some embodiments, upon the reception of the path information, the first target mobile device moves directly based on the received path information.

In some embodiments, the first control instruction can further include: identifier information of the article required by the user. After the first target mobile device moves to the target position, the first target mobile device further delivers the required article to the user according to the first control instruction and the identifier information. For example, the automatic vending machine pops up, according to identifier information and payment information of the commodities, the corresponding number of commodities to an article taking space, so that the user takes the article from the article taking space.

In some embodiments, the method further includes the following operation.

If a current state of a second target mobile device is found to be more appropriate to move to the target position when the first mobile device moves to the target position, a second control instruction is sent to the first target mobile device and the first control instruction is sent to the second target mobile device, herein the second control instruction is at least used for controlling the first mobile device to stop moving to the target position; and the first control instruction is at least used for controlling the second target mobile device to move to the target position.

In some embodiments, multiple mobile devices are provided. Some mobile device is in a moving state when the server selects and completes one operation request. The server preferably selects an alternative mobile device in the static state as the first target mobile device. The mobile device in the moving state previously stops moving, and the mobile device stopping moving is an optimal device most appropriate to move to the target position at present to provide the article for the user. In this case, the device is used as the second target mobile device, and the server sends a second control instruction to the first target mobile device. The second control instruction can be an instruction for stopping moving, or, an instruction for canceling a task. Upon the reception of the second control instruction, the first mobile device stops moving to the target position, and enters to the static state, or executes an operation of/for moving to other destinations, etc.

In this embodiment, the time of the second target mobile device moving to the target position is shorter than that of the first target mobile device; or, the distance or path of the second target mobile device moving to the target position is nearer or shorter than those of the first target mobile device; or, the inventory of the second target mobile device is larger/greater than that of the first target mobile device.

In some embodiments, the method further includes: execution state information sent by the target device is received; and completion state information of the operation request is determined according to the execution state information.

In this embodiment, the execution state information can include: one or more of movement state information, inventory state information, article delivery state information and working state information of the first target mobile device. Upon the reception of the execution state information, the server can know a completion degree and other information of the current operation request. For example, according to the movement state information, the server can know a distance between the target mobile device and the target position, and the time of reaching the target position. According to the inventory state information, the server can determine how many corresponding articles are on the first target mobile device, and whether the inventory level on the first target mobile device is sufficient if another person nearby places an order, etc. According to the article delivery state information, the server can know whether the first target mobile device has already opened a door to provide a convenience for the user to take the article, and can also know whether the user has already taken the article from the first target mobile device, etc. If the operation request is a purchasing request, the execution state information can be used by/configured for the server to determine a completion state of the order corresponding to the current purchasing request.

Indication information for indicating whether the first target mobile device is in a normal working state is provided. During the movement of the mobile device, a condition in which the energy is used up can occur.

In some embodiments, the method further includes the following operations.

Second position information which is positioned in real time and sent by the user equipment is received; herein the second position information is used for indicating an updated target position.

The updated target position is sent to the first target mobile device.

In some application scenarios, both the user and the user equipment can move. In this embodiment, the server further acquires a real-time location/position of the user equipment in real time to obtain second position information, re-determines the target position based on the second position information, and sends the second position information of the target position to the first target mobile device, so that the first target mobile device can re-plan a path according to the updated target position, and adjust the re-planned movement path to adjust a movement direction and other parameters. In this way, the user is unnecessary to wait for the first target mobile device in situ, and the mobile device can find the user automatically and deliver the article to the user, thus further providing the convenience for the user to acquire the article and further improving the user experience.

For example, when the mobile device moves from one position to another position, it is possible that an obstacle for suddenly stopping the operation of the mobile device occurs on a road. For example, the obstacle on the road is clamped into a chassis of the mobile device, which results in that the mobile device does not continue to move. At this time, the server receives abnormal working state information reported by the first target mobile device. Therefore, the server can further determine whether the mobile device is in the normal working state according to the working state information.

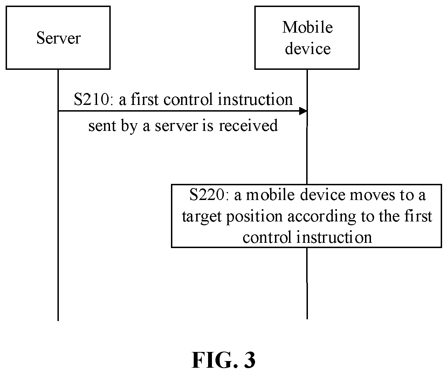

As illustrated in FIG. 3, in an embodiment, an information processing method is provided, and the method is applied to a mobile device. The mobile device is loaded with an article meeting an article demand, and the method includes the following operations.

At S210: a first control instruction sent by a server is received.

At S220: a mobile device moves to a target position according to the first control instruction.

The information processing method in this embodiment is an information processing method applied to a mobile device, and the mobile device can be the above ground robot or low-altitude flight robot.

The mobile device is loaded with an article meeting an article demand of a user, such as a commodity, a file, a building material and various physical articles.

The mobile device is scheduled by a server, and moves to a target position according to a first control instruction sent by the server in/during a scheduling process, thus providing the required article for the user.

The step S 120 can include the following operations.

Path information of moving to the target position corresponding to the first control instruction from a current position of the mobile device is acquired.

The mobile device moves along a planned path indicated by the path information.

The operation that path information of moving to the target position corresponding to the first control instruction from a current position of the mobile device is acquired includes at least one of the followings.

The path information is received from the server.

The mobile device plans a path according to its own position and the target position to obtain the path information.

In some embodiments, the operation that the mobile device moves along a planned path indicated by the path information includes the following operations.

An obstacle detection function is started to detect an obstacle.

A movement direction and the like are adjusted automatically in movement to bypass/avoid the detected obstacle.

For example, the mobile device acquires relative position information with the obstacle based on ultrasonic positioning, visual collection and other manners, draws an obstacle map in real time, and adjusts a movement parameter based on the obstacle map.

In some embodiments, the method further includes the following operations.

Device state information is sent to the server; herein the device state information is used by/configured for the server to select a first target mobile device to move to the target position.

The device state information can include: one or more of inventory state information for indicating an inventory state of the device, current position information for indicating a position where the device is located, energy storage information and other information. The device state information can be used by the server to select the first target mobile device to move to the target position.

In some embodiments, the method can further include: a second control instruction sent by the server is received in a process of moving to the target position; and the mobile device stops moving to the target position according to the second control instruction.

If the mobile device receives the second control instruction, it is indicated that the server finds other more appropriate mobile devices to move to the target address at present; and at this time, the current mobile device stops moving to the target position, or moves to other destinations.

In some embodiments, the method further includes: execution state information is sent to the server; herein the execution state information is used by the server to determine completion state information of the operation request from the user equipment.

In this embodiment, the execution state information is used for indicating a completion condition of a task or an operation corresponding to the operation request. In this sense, the mobile device sends the execution state information to the server, which is convenient for the server to monitor a completion degree and the like.

In some embodiments, the method can further include: second position information sent by the server is received; an updated target position is determined according to the second position information; and the mobile device moves to the updated target position.

In this embodiment, the second position information can be position information after the position of the user is updated. In this way, the mobile device can adjust its movement destination according to the position of the user, thus providing a better service.

In some embodiments, energy storage information is acquired.

When the energy storage information indicates that current stored energy is lower/less than a preset value, the mobile device moves to an energy supplementing area.

The energy storage information can include: information for indicating a current energy storage condition of the mobile device, such as a residual electric quantity, a residual power ratio and a residual fuel amount and the like. The mobile device can automatically move to a predetermined position according to its own energy storage information for energy supplementation. For example, the robot moves to a charging pile and then charges automatically at the charging pile. The energy supplementing area can be a charging area such as an area where the charging pile is located, and can also be an area where a fuel supply station is located. The fuel can be petroleum and other combustible materials,

In some embodiments, the method further includes the following operations.

It is determined whether a current distance between the mobile device and the user equipment is located between a first threshold and a second threshold; herein the first threshold is greater than the second threshold.

When the current distance is greater than the first threshold, the mobile device continues to move to the user equipment; and/or, if the current distance is smaller/less than the second threshold, the mobile device stops moving to the user equipment.

The first threshold and the second threshold are a distance convenient for the user to take the article from the mobile device. If the current distance between the mobile device and the user equipment is smaller than the first threshold, the user can have an oppressing sensation to feel uncomfortable; and if the current distance is greater than the second distance, the user can take the article inconveniently. In this embodiment, the mobile device automatically determines whether the distance with the user equipment is smaller than the second threshold and greater than the first threshold; if yes, the mobile device keeps static; otherwise, the mobile device moves along with the user equipment.

The position information of the user equipment can be acquired by the server from the user equipment, and then forwarded by the server to the mobile device. The mobile device can also obtain a communication identifier of the user equipment from the server, automatically establish connection with the user equipment, and read position information of the user equipment from the user equipment. In some other embodiments, the mobile device can also detect a position relationship with the user equipment via its own sensor to obtain the current distance. A positioning sensor in the mobile device can position the mobile device.

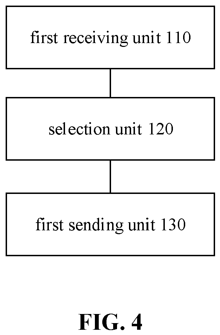

As illustrated in FIG. 4, in an embodiment, an information processing apparatus is provided, and the apparatus is applied to a server and includes: a first receiving unit 110, a selection unit 120 and a first sending unit 130.

The first receiving unit 110 is configured to receive an operation request sent by user equipment, herein the operation request includes: first position information and article demand information, and the first position information is used for indicating a target position.

The selection unit 120 is configured to select a first target mobile device according to a selection strategy and the first position information; herein the first target mobile device is loaded with an article meeting an indication of the article demand information.

The first sending unit 130 is configured to send a first control instruction to the first target mobile device, herein the first control instruction is at least used for controlling the first target mobile device to move to the target position.

The first receiving unit 110, the selection unit 120 and the first sending unit 130 can correspond to a program module, and can be configured to implement reception of the operation request, selection of the first target mobile device and reception of the first control instruction via a processor.

In some embodiments, the selection unit 120 can be configured to acquire device state information of controlled mobile devices, herein the device state information includes: inventory state information, and the device state information further includes at least one of: movement state information or current position information of the controlled mobile device; and to select the first target mobile device according to the selection strategy and in combination with the first position information and the device state information.

Furthermore, the selection unit 120 is configured to select, according to an inventory digestive strategy and the inventory state information, alternative mobile devices meeting an article demand corresponding to the article demand information; to select the first target mobile device from the alternative mobile devices according to a mobility selection strategy, the first position information and the movement state information; or, to select the first target mobile device from the alternative mobile devices according to the mobility selection strategy, the first position information and the current position information; or, to select the first target mobile device from the alternative mobile devices according to the mobility selection strategy, the first position information, the current position information and the movement state information.

In some embodiments, the selection unit 120 is configured to execute one of the followings:
select an alternative mobile device nearest to the target position as the first target mobile device according to a distance shortest strategy;
select an alternative mobile device reaching the target position along a shortest path as the first target mobile device according to a path shortest strategy; and
select an alternative mobile device moving to the target position at shortest time as the first target mobile device according to a time shortest strategy.

In some embodiments, the first sending unit 130 is further configured to send, if it is found that a current state of a second target mobile device is more appropriate to move to the target position when the first mobile device moves to the target position, a second control instruction to the first target mobile device and send the first control instruction to the second target mobile device, herein the second control instruction is at least used for controlling the first mobile device to stop moving to the target position; and the first control instruction is at least used for controlling the second target mobile device to move to the target position.

In some embodiments, the first receiving unit 110 is further configured to receive execution state information sent by the target device. The apparatus further includes: a transmission unit, configured to determine completion state information of the operation request according to the execution state information, and/or, to determine whether the first target mobile device is in a normal working state according to the execution state information.

In some embodiments, the first receiving unit 110 is further configured to receive second position information which is positioned in real time and sent by the user equipment; herein the second position information is used for indicating an updated target position; and the first sending unit 130 is specifically configured to send the updated target position to the first target mobile device.

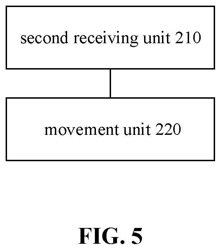

As illustrated in FIG. 5, in an embodiment, an information processing apparatus is provided, and the apparatus is applied to a mobile device. The mobile device is loaded with an article meeting an article demand, and the apparatus includes: a second receiving unit 210 and a movement unit 220.

The second receiving unit 210 is configured to receive a first control instruction sent by a server.

The movement unit 220 is configured to move to a target position according to the first control instruction.

Both the second receiving unit 210 and the movement unit 220 can be applied to a program module in the mobile device, and can implement, by means of execution of the program module and via the processor, reception of the first control instruction, and control of its own movement apparatus to move to the target position.

In some embodiments, the apparatus further includes: a second sending unit.

The second sending unit can be configured to send device state information to the server; herein the device state information is used by the server to select a first target mobile device to move to the target position.

The second receiving unit 210 can further be configured to receive, in a process of moving to the target position, a second control instruction sent by the server; and the movement unit 220 is further configured to stop moving to the target position according to the second control instruction.

In some embodiments, the second sending unit can be configured to send execution state information to the server; herein the execution state information is used by the server to determine completion state information of the operation request from the user equipment.

The second receiving unit 210 is configured to receive second position information sent by the server.

The apparatus further includes: an update unit, configured to determine an updated target position according to the second position information; and the movement unit 220 is configured to move to the updated target position.

In some embodiments, the apparatus further includes: an acquisition unit, configured to acquire energy storage information; and the movement unit 220 is further configured to move to an energy supplementing area when the energy storage information indicates that current stored energy is lower than a preset value.

In some embodiments, the apparatus further includes: a determination unit, configured to determine whether a current distance between the mobile device and the user equipment is located between a first threshold and a second threshold, herein the first threshold is greater than the second threshold; and the movement unit 220 is configured to continue to move to the user equipment if the current distance is greater than the first threshold; and/or, stop moving to the user equipment if the current distance is smaller than the second threshold.

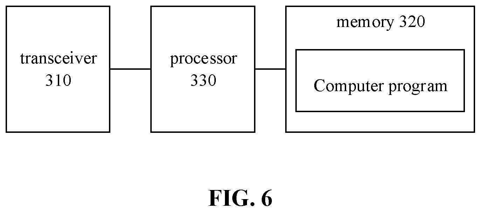

As illustrated in FIG. 6, in an embodiment, an electronic device is provided, and the electronic device includes: a transceiver 310, a memory 320, a processor 330, and a computer program stored on the memory 320 and executed by the processor 330.

The processor 330 is connected to/with the transceiver 310 and the memory 320 respectively, and configured to implement, by executing the computer program, one or more of the above information processing methods applied to a server or the above information processing methods applied to a mobile device.

The transceiver 310 can correspond to various types of devices having an information transceiving function, for example, a transceiving antenna and/or a network card.

The memory 320 can correspond to a memory 320 including a storage medium, and can be a random access memory 320, a read-only memory 320, a programmable array, an application processor 330 or an application-specific integrated circuit, etc.

The memory 320 can be configured to store information.

The processor 330 can be a central processor, a microprocessor, a digital signal processor, an application-specific integrated circuit, or the programmable array or the like. The processor can be connected to the memory and the transceiver via an integrated circuit bus and the like, and is configured to implement, by means of execution of a computer program and so on, the above information processing method applied to the server or the mobile device.

The electronic device in this embodiment can be the above server or mobile device.

An embodiment further provides a computer storage medium. The computer storage medium stores a computer program; and the computer program can implement, after being executed, an information processing method provided by one or more of the above-mentioned technical solutions, for example, one or more of information processing methods applied to the server, or one or more of information processing methods applied to the mobile device.

The computer storage medium can include: various media capable of storing a program code such as a mobile storage device, a Read-Only Memory (ROM), a Random Access Memory (RAM), a magnetic disk or an optical disc. The computer storage medium can be a non-transitory storage medium optionally.

Several specific examples will be provided hereinafter in combination with the above-mentioned any embodiment.

### Example 1:

This example provides a callable retailing robot. When the callable retailing robot is operated in an indoor or outdoor ground (for example, a shopping mall, a departure hall and a park), one or multiple robots are contained generally. Each robot includes the following components in part or whole:
a movable chassis having a battery, and an automatic vending machine cabinet on the chassis; a commodity is presented inside the vending machine cabinet, and a user can purchase the commodity via a manner of scanning a code for payment and the like;
a sensor for independent obstacle avoidance, for example, a laser radar, a depth sensor, an ultrasonic sensor, an infrared distance measurement sensor, a millimeter-wave radar and the like, is set on the robot;
a motion control module for controlling the robot to move to the appointed path point with reference to the environment obstacle avoidance map, so as to automatically avoid any static or dynamic obstacle in operation;
a sensor for indoor or outdoor positioning, such as a Global Position System (GPS), a laser radar, a camera and the like is set on the robot; and
a communication module connected to the Internet, such as a loudspeaker, a screen, lamplight, a microphone and the like for interaction with the user.

In addition to a robot body, a background system for supporting operation of the robot body is further provided, and includes: a server backend, a management backend, and a charging pile.

The server backend distributes an instruction for the operation of the robot according to a marketing demand, and records and manages all positioning information, marketing behaviors, abnormal behaviors and the like of the robot under the government.

The management backend is a possessor of the robot, and can read a real-time state and historical operation data of all robots. The information provides a data support for replenishment, operation and other behaviors of background personnel.

### The charging pile is for the independent charging of the robot.

The server backend and the management backend can correspond to the above server.

### Example 2:

Based on the robot and the background system in the example 1, this example provides a commodity selling method, which includes the following operations.

A mobile phone is powered on by a user. A current position is acquired via a positioning technology, such as a GPS, a WIFI and a Bluetooth fingerprint, built in the mobile phone. A robot marketing platform in a place is connected to a program or a webpage of the mobile phone to select a required commodity and purchase in advance.

Upon the reception of a commodity request and a user real-time position of the marketing platform, a robot backend places a task at a Kth position of a queue. When one or more robots in the place complete the task with a serial number smaller than K, one robot is scheduled automatically according to these current positions of the robots, a current position of the user and a commodity inventory, thus achieving the effect that the expected delivery time to the user is the shortest.

Upon the reception of the instruction, the specified robot enters a delivery process. In delivery, the robot continuously acquires current position information (the user can move during the whole process) on the mobile phone of the user, and calculates an operation path for planning. During operation, the robot calculates a surrounding environment obstacle avoidance map in real time via an independent obstacle avoidance sensor, and selects, based on positioning information of the current positioning sensor, a next path point nearest to the current position from the path. A motion control module of the robot is operated to the path point with reference to the environment obstacle avoidance map, so as to assure not to collide with any static or dynamic obstacle in operation. If the path point is blocked by the obstacle or reached, the robot automatically switches to a next path point for operation.

If another robot can complete the delivery of the Kth task more quickly (without affecting the task before the K) due to movement of the user and other changes, the robot can be switched at any time, the delivery of the original robot is canceled, and the current robot is arranged for continuous delivery.

When the distance between the robot and the user is smaller than a threshold 1 (corresponding to the above second threshold), the robot stops. The robot backend sends a robot arrival message to the mobile phone of the user to remind the user of actively finding the robot and completing the commodity purchasement. During this process, once the distance between the user and the robot exceeds a threshold 2 (corresponding to the above first threshold, and threshold 2 is greater than threshold 1), the robot restores to move to the user. In this process, the robot can also play a voice prompt, and/or play a visual prompt on a screen of the robot, for example, display an operation prompt and the like via a display. If the user fails to complete the purchasement for a certain time threshold, the task is canceled automatically.

After the robot stops, the user can purchase via the following manners: the user scans a two-dimensional code on the robot by using/by means of the mobile phone, and selects the commodity and makes a payment via a program on the mobile phone or a webpage. The payment can be made via a manner of inserting a coin and inserting a paper currency into a box of the robot, and the commodity is selected by using a button or a contact screen on the box. After the payment, the robot releases the corresponding commodity. After the user takes the commodity, the marketing is completed. Upon the determination that the article is taken away (for example, a door is closed, an article warehouse is empty, the user is far away, or the payment exceeds for a certain time), the robot completes the marketing of the task and enters in a standby state.

In some embodiments provided by the disclosure, it should be understood that the disclosed equipment and method can be implemented in another manner. The equipment embodiment described above is only schematic, and for example, division of the units is only logic function division, and other division manners can be adopted during practical implementation. For example, multiple units or components can be combined or integrated into another system, or some characteristics can be neglected or not executed. In addition, coupling, or direct coupling or communication connection between each displayed or discussed component can be indirect coupling or communication connection, implemented through some interfaces, of the equipment or the units, and can be electrical and mechanical or adopt other forms.

The units described as separate parts can or cannot be physically separated, and parts displayed as units can or cannot be physical units, and namely can be located in the same place, or can also be distributed to multiple network units. Part or all of the units can be selected to achieve the purpose of the solutions of the embodiments according to a practical requirement.

In addition, each function unit in each embodiment of the disclosure can be integrated into a processing unit, each unit can also exist independently, and two or more than two unit can also be integrated into a unit. The integrated unit can be implemented in a hardware form, and can also be implemented in form of hardware and software function unit.

Those skilled in the art should know that: all or part of the steps of the above-mentioned method embodiment can be implemented by instructing related hardware through a program, the above-mentioned program can be stored in a computer-readable storage medium, and the program is executed to execute the steps of the above-mentioned method embodiment.

The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

### INDUSTRIAL APPLICABILITY

In technical solutions of the disclosure, a self-moving device is used as a delivery device for an article, so that a user can only send an operation request via user equipment, and a mobile device loaded with an article required by the user moves to a target position where the user is located. Therefore, the article can be provided for the user automatically without the movement of the user, an article obtaining demand when the user is inconvenient to move is met, the positive industrial effect is achieved, and the technical solutions are implemented simply and can be used widely in industry.

## Claims

1. An information processing method, applied to a server, comprising:
receiving an operation request sent by user equipment; wherein the operation request comprises: first position information and article demand information, and the first position information is used for indicating a target position;
selecting a first target mobile device according to a selection strategy and the first position information; wherein the first target mobile device is loaded with an article meeting an indication of the article demand information; and
sending a first control instruction to the first target mobile device; wherein the first control instruction is at least used for controlling the first target mobile device to move to the target position.

2. The method of claim 1, wherein
the selecting a first target mobile device according to a selection strategy and the first position information comprises:
acquiring device state information of controlled mobile devices; wherein the device state information comprises: inventory state information; and the device state information further comprises at least one of: movement state information or current position information of the controlled mobile device; and
selecting the first target mobile device according to the selection strategy and in combination with the first position information and the device state information.

3. The method of claim 2, wherein
the selecting the first target mobile device according to the selection strategy and in combination with the first position information and the device state information comprises:
according to an inventory digestive strategy and the inventory state information, selecting alternative mobile devices capable of meeting an article demand corresponding to the article demand information; and
selecting the first target mobile device from the alternative mobile devices according to a mobility selection strategy, the first position information and the movement state information; or, selecting the first target mobile device from the alternative mobile devices according to the mobility selection strategy, the first position information and the current position information; or, selecting the first target mobile device from the alternative mobile devices according to the mobility selection strategy, the first position information, the current position information and the movement state information.

4. The method of claim 2, wherein
the selecting the first target mobile device according to the selection strategy and in combination with the first position information and the device state information comprises at least one of:
selecting an alternative mobile device nearest to the target position as the first target mobile device according to a distance shortest strategy;
selecting an alternative mobile device reaching the target position along a shortest path as the first target mobile device according to a path shortest strategy; or
selecting an alternative mobile device moving to the target position at shortest time as the first target mobile device according to a time shortest strategy.

5. The method of any one of claims 1 to 4, further comprising:
when a current state of a second target mobile device is found to be more appropriate to move to the target position when the first target mobile device moves to the target position, sending a second control instruction to the first target mobile device and sending the first control instruction to the second target mobile device; wherein the second control instruction is at least used for controlling the first target mobile device to stop moving to the target position; and the first control instruction is at least used for controlling the second target mobile device to move to the target position.

6. The method of any one of claims 1 to 4, further comprising:
receiving execution state information sent by the first target mobile device;
further comprising at least of:
determining completion state information of the operation request according to the execution state information, or
determining whether the first target mobile device is in a normal working state according to the execution state information.

7. The method of any one of claims 1 to 4, further comprising:
receiving second position information which is positioned in real time and sent by the user equipment; wherein the second position information is used for indicating an updated target position; and
sending the updated target position to the first target mobile device.

8. An information processing method, applied to a mobile device, the mobile device being loaded with an article meeting an article demand, comprising:
receiving a first control instruction sent by a server; and
moving to a target position according to the first control instruction.

9. The method of claim 8, further comprising:
sending device state information to the server; wherein the device state information is used by the server to select a first target mobile device to move to the target position.

10. The method of claim 8 or 9, further comprising:
receiving a second control instruction sent by the server in a process of moving to the target position; and
stopping moving to the target position according to the second control instruction.

11. The method of claim 8 or 9, further comprising:
sending execution state information to the server; wherein the execution state information is used by the server to determine completion state information of an operation request from user equipment.

12. The method of claim 8 or 9, further comprising:
receiving second position information sent by the server;
determining an updated target position according to the second position information; and
moving to the updated target position.

13. The method of claim 8 or 9, further comprising:
acquiring energy storage information; and
when the energy storage information indicates that current stored energy is lower than a preset value, moving to an energy supplementing area.

14. The method of claim 8 or 9, further comprising:
determining whether a current distance between the mobile device and user equipment is located between a first threshold and a second threshold; wherein the first threshold is greater than the second threshold;
when the current distance is greater than the first threshold, continuing to move to the user equipment; and/or, when the current distance is less than the second threshold, stopping moving to the user equipment.

15. An information processing apparatus, applied to a server, comprising:
a first receiving unit, configured to receive an operation request sent by user equipment; wherein the operation request comprises: first position information and article demand information, and the first position information is used for indicating a target position;
a selection unit, configured to select a first target mobile device according to a selection strategy and the first position information; wherein the first target mobile device is loaded with an article meeting an indication of the article demand information; and
a first sending unit, configured to send a first control instruction to the first target mobile device; wherein the first control instruction is at least used for controlling the first target mobile device to move to the target position.

16. An information processing apparatus, applied to a mobile device, the mobile device being loaded with an article meeting an article demand, comprising:
a second receiving unit, configured to receive a first control instruction sent by a server; and
a movement unit, configured to move to a target position according to the first control instruction.

17. An electronic device, comprising: a transceiver, a memory, a processor, and a computer program stored on the memory and executed by the processor;
wherein the processor is connected to the transceiver and the memory respectively, and is configured to perform, by executing the computer program, the method of any one of claims 1 to 7 or 8 to 14.

18. A computer storage medium, storing a computer program, and the computer program being executed to perform the method of any one of claims 1 to 7 or 8 to 14.
